(19) Europäisches Patentamt
European Patent Office
Office européen des brevets

(11) **EP 4 482 009 A1**

(12) **EUROPEAN PATENT APPLICATION**

(43) Date of publication:
**25.12.2024 Bulletin 2024/52**

(21) Application number: **24175446.4**

(22) Date of filing: **13.05.2024**

(51) International Patent Classification (IPC):
*H02M 1/15* (2006.01)    *H02M 3/00* (2006.01)
*H02M 3/335* (2006.01)    *H02M 1/00* (2006.01)
*H02M 1/42* (2007.01)

(52) Cooperative Patent Classification (CPC):
**H02M 3/01; H02M 1/007; H02M 1/15;
H02M 1/4225; H02M 3/33523; H02M 3/33561**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.06.2023 US 202363521950 P
20.03.2024 CN 202410319855**

(71) Applicant: **Delta Electronics, Inc.
Taoyuan City 33370 (TW)**

(72) Inventors:
• **Lai, Chien-An
32063 Taoyuan City (TW)**
• **Chen, I
32063 Taoyuan City (TW)**

(74) Representative: **Uexküll & Stolberg
Partnerschaft von
Patent- und Rechtsanwälten mbB
Beselerstraße 4
22607 Hamburg (DE)**

(54) **POWER SUPPLY APPARATUS**

(57) A power supply apparatus (1) includes a power factor correction circuit (2), an LLC converter (3), an auxiliary conversion circuit (4), a secondary side controller (5) and a voltage tracking circuit (6). The power factor correction circuit (2) is used for converting a DC link voltage into a first voltage. The LLC converter (3) includes a primary side circuit (30) and a secondary side circuit (31), which are coupled with each other. The primary side circuit (30) receives the first voltage. The first voltage is converted into an auxiliary voltage by the auxiliary conversion circuit (4). The voltage tracking circuit (6) detects the auxiliary voltage and issues a detection signal to the secondary side controller (5). The secondary side controller (5) tracks a ripple change of the DC link voltage and instantly generates a reverse waveform opposite to a waveform of the DC link voltage. The secondary side controller (5) controls the operations of the LLC converter (3) according to the reverse waveform.

FIG. 1

EP 4 482 009 A1

**Description**

FIELD OF THE INVENTION

The present disclosure relates to a power supply apparatus, and more particularly to a power supply apparatus with a ripple compensation function.

BACKGROUND OF THE INVENTION

Power supply apparatuses are widely used in daily lives. Generally, an electronic product is equipped with a power supply apparatus for providing electric power to the components or electronic devices inside the electronic product. A power supply apparatus usually includes a power factor correction (PFC) circuit and an LLC resonant converter. The PFC circuit receives an AC voltage (e.g., the AC voltage from a utility power system). After the AC voltage is subjected to the power factor correction by the PFC circuit, a transition DC voltage is generated. The LLC resonant converter receives the transition DC voltage. In addition, the received transition DC voltage is converted into output DC voltages with different voltage levels in a resonant manner by the LLC resonant converter.

However, the existing power supply apparatus with the LLC resonant converter still has some drawbacks. For example, when the power supply apparatus is connected with the power grid through an uncontrolled rectifier bridge, the problem of generating double-frequency ripple occurs. The frequency of the double-frequency ripple is about 100Hz, which is very harmful to the safe and stable operations of the power supply apparatus or even results in failure of the power supply apparatus.

For solving the above drawbacks, some power supply apparatuses are equipped with isolators such as optical couplers. Due to the arrangement of the isolator, the input voltage is transmitted to the controller on the secondary side of the power supply apparatus at the zero-crossing point. Consequently, the controller on the secondary side can reconstruct the waveform and adjust the reference voltage corresponding to the output voltage. In this way, the purpose of offsetting the ripple is achieved. However, different frequencies of the input voltages, different operating temperature conditions of the loads or other factors cause the changes of the capacitance values of capacitors, which will lead to different ripple changes. In other words, this approach is not comprehensive, and only the adjustment to a certain extent is permitted.

Furthermore, some power supply apparatuses use controllers to detect the ripples of the output voltage and separate the ripples. Consequently, a reverse waveform is created to control the ripples of the output voltage. However, the method of detecting the ripples of the output voltage can only control the ripples to a certain extent. In addition, this method is unable to deal with the source, and it is necessary to combine with the current feedback mechanism. Furthermore, in order to detect the bulk voltage, the controller needs to be located on the primary side. The method of using the controller to detect the ripples of the output voltage on the secondary side of the power supply apparatus is only suitable for handling the constant resistance loads but unable to handle the constant current loads.

Therefore, it is important to provide an improved power supply apparatus in order to overcome the drawbacks of the conventional technologies.

SUMMARY OF THE INVENTION

An object of the present disclosure provides a power supply apparatus. A voltage tracking circuit detects an auxiliary voltage from an auxiliary conversion circuit. A secondary side controller on the secondary side of the LLC converter instantly generates the reverse waveform that is opposite to the waveform of the DC link voltage. According to the ripple change of the DC link voltage, the secondary side controller controls the operations of the LLC converter. The power supply apparatus can directly customize a corresponding ripple compensation method according to the magnitude of the ripple source. Consequently, regardless of the input capacitance value, the input frequency change or the load change, the secondary side controller can give the optimized ripple compensation value.

In accordance with an aspect of the present disclosure, a power supply apparatus is provided. The power supply apparatus includes a power factor correction circuit, an LLC converter, an auxiliary conversion circuit, a secondary side controller and a voltage tracking circuit. The power factor correction circuit is used for converting a DC link voltage into a first voltage. The LLC converter includes a primary side circuit and a secondary side circuit, which are coupled with each other. The primary side circuit is electrically connected with the power factor correction circuit to receive the first voltage. The first voltage is converted into a second voltage by the LLC converter. The second voltage is outputted from the secondary side circuit. The auxiliary conversion circuit is electrically connected with the power factor correction circuit. The first voltage is converted into an auxiliary voltage by the auxiliary conversion circuit. The secondary side controller is disposed on a secondary side of the LLC converter. The secondary side controller controls operations of the LLC converter. The voltage tracking circuit is electrically connected to the auxiliary conversion circuit. The voltage tracking circuit detects the auxiliary voltage and issues a detection signal to the secondary side controller according to a result of detecting the auxiliary voltage. According to the detection signal, the secondary side controller tracks a ripple change of the DC link voltage and instantly generates a reverse waveform opposite to a waveform of the DC link voltage. In addition, the secondary side controller controls the operations of the LLC converter according to the reverse waveform. Consequently, the secondary side voltage ripples of the DC link voltage are suppressed.

The above contents of the present disclosure will become more readily apparent to those ordinarily skilled in the art after reviewing the following detailed description and accompanying drawings, in which:

BRIEF DESCRIPTION OF THE DRAWINGS

FIG. 1 is a schematic circuit block diagram illustrating the architecture of a power supply apparatus according to an embodiment of the present disclosure;
FIG. 2 a schematic circuit diagram illustrating the circuitry topology of a portion of the power supply apparatus shown in FIG. 1; and
FIG. 3 is a schematic timing waveform diagram illustrating the DC link voltage received by the power supply apparatus and the detection signal at the first terminal of the third capacitor of the power supply apparatus.

DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

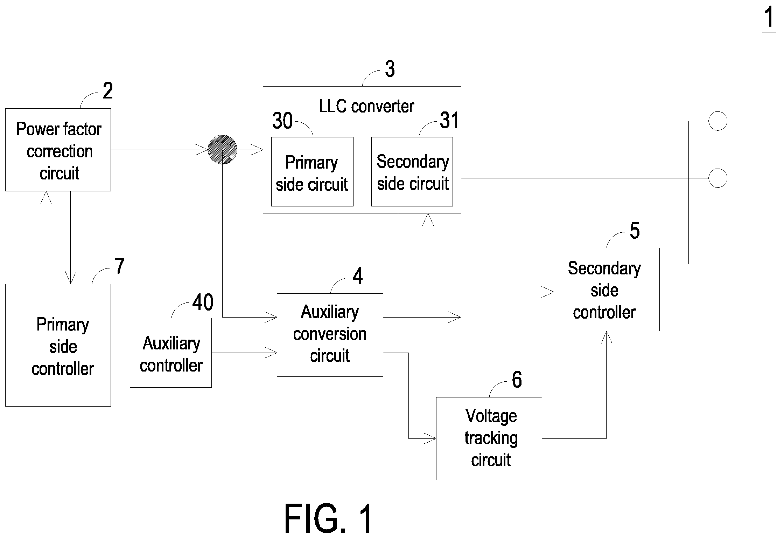

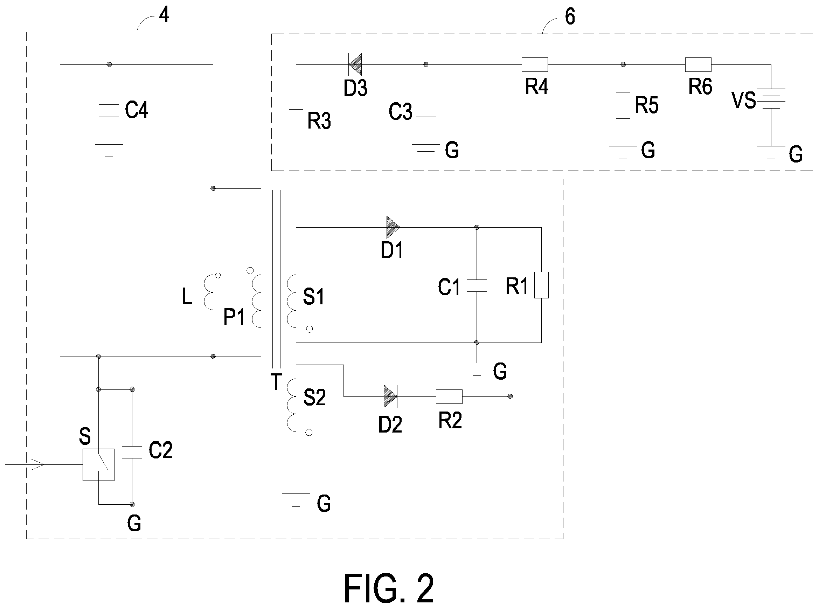

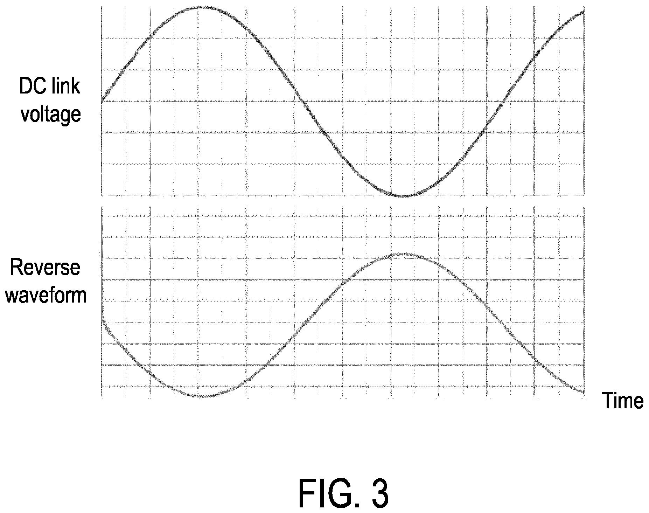

Please refer to FIGS. 1, 2 and 3. FIG. 1 is a schematic circuit block diagram illustrating the architecture of a power supply apparatus according to an embodiment of the present disclosure. FIG. 2 a schematic circuit diagram illustrating the circuitry topology of a portion of the power supply apparatus shown in FIG. 1. FIG. 3 is a schematic timing waveform diagram illustrating the DC link voltage received by the power supply apparatus and the detection signal at the first terminal of the third capacitor of the power supply apparatus.

In an embodiment, the power supply apparatus 1 includes a power factor correction circuit 2, an LLC converter 3, an auxiliary conversion circuit 4, a secondary side controller 5 and a voltage tracking circuit 6.

The input terminal of the power factor correction circuit 2 receives the DC link voltage. After a power factor correction is performed on the DC link voltage by the power factor correction circuit 2, the DC link voltage is converted into a first voltage. The first voltage is outputted from the output terminal of the power factor correction circuit 2.

The input terminal of the LLC converter 3 is electrically connected with the output terminal of the power factor correction circuit 2. The output terminal of the LLC converter 3 is electrically connected with a load (not shown). The LLC converter 3 includes a primary side circuit 30 and a secondary side circuit 31, which are coupled with each other. The primary side circuit 30 is electrically connected with the input terminal of the LLC converter 3. The primary side circuit 30 receives the first voltage through the input terminal of the LLC converter 3. The output terminal of the secondary side circuit 31 is electrically connected with the output terminal of the LLC converter 3. After the first voltage is converted into a second voltage by the LLC converter 3, the second voltage is outputted from the output terminal of the LLC converter 3. In an embodiment, the primary side circuit 30 and the secondary side circuit 31 are coupled with each other through a transformer (not shown). The primary side circuit 30 is disposed on the primary side of the LLC converter 3. The secondary side circuit 31 is disposed on the secondary side of LLC converter 3.

The input terminal of the auxiliary conversion circuit 4 is electrically connected with the output terminal of the power factor correction circuit 2. By the auxiliary conversion circuit 4, the first voltage is converted into an auxiliary voltage (e.g., 12V). The auxiliary voltage is outputted from the output terminal of the auxiliary conversion circuit 4 to some components of the power supply apparatus 1 (e.g., fans and/or controllers).

Like the secondary side circuit 31, the secondary side controller 5 is disposed on the secondary side of the LLC converter 3. The secondary side controller 5 is used to control the operations of the LLC converter 3.

The voltage tracking circuit 6 is electrically connected with the output terminal of the auxiliary conversion circuit 4 for detecting the auxiliary voltage from the auxiliary conversion circuit 4. According to the result of detecting the auxiliary voltage, the voltage tracking circuit 6 issues a detection signal to the secondary side controller 5. According to the detection signal, the secondary side controller 5 tracks the ripple change of the DC link voltage and instantly generates a reverse waveform that is opposite to the waveform of the DC link voltage. An example of the reverse waveform is shown in FIG. 3. According to the reverse waveform, the secondary side controller 5 controls the operations of the LLC converter 3. Consequently, the secondary side voltage ripples of the DC link voltage can be effectively suppressed. The technology of controlling the operations of the LLC converter 3 to suppress the voltage ripples according to the ripple change of the DC link voltage is known in the art, and not redundantly described herein.

In accordance with a feature of the present disclosure, the voltage tracking circuit 6 detects the auxiliary voltage from the auxiliary conversion circuit 4 and provides the detection result to the secondary side controller 5, which is disposed on the secondary side of the LLC converter 3. According to the ripple change of the DC link voltage, the secondary side controller 5 instantly generates the reverse waveform that is opposite to the waveform of the DC link voltage. According to the reverse waveform, the secondary side controller 5 controls the operations of the LLC converter 3 in order to suppress the voltage ripples of the DC link voltage.

From the above descriptions, the power supply apparatus 1 of the present disclosure can directly customize a corresponding ripple compensation method according to the magnitude of the ripple source (i.e., the DC link voltage). Consequently, regardless of the input capacitance value, the input frequency change or the load change, the secondary side controller 5 can give the optimized ripple compensation value.

As mentioned above, the secondary side controller 5 instantly generates the reverse waveform opposite to the waveform of the DC link voltage according to the ripple change of the DC link voltage. Consequently, the ripple compensation purpose can be achieved. Since the ripple compensation is not based on the output voltage of the power supply apparatus 1 (i.e., the second voltage), the power supply apparatus 1 is capable of performing the ripple compensation for the constant resistance loads and the constant current loads.

In an embodiment, the auxiliary conversion circuit 4 includes a transformer T, a first diode D1, a first capacitor C1, a first resistor R1, a second diode D2, a second resistor R2, an auxiliary switch S and a second capacitor C2.

The transformer T includes a primary winding P1, a first secondary winding S1 and a second secondary winding S2. The first terminal of the primary winding P1 is a common-polarity terminal. The first terminal and the second terminal of the primary winding P1 are electrically connected with the output terminal of the power factor correction circuit 2. In addition, the primary winding P1 is reversely coupled with the first secondary winding S1 and the second secondary winding S2.

The first terminal of the auxiliary switch S is electrically connected with the second terminal of the primary winding P1. The second terminal of the auxiliary switch S is electrically connected with a ground terminal G.

The first terminal of the second capacitor C2 is electrically connected with the first terminal of the auxiliary switch S. The second terminal of the second capacitor C2 is electrically connected with the second terminal of the auxiliary switch S.

The first terminal of the first secondary winding S1 (i.e., a common-polarity terminal) is electrically connected with the ground terminal G. The second terminal of the first secondary winding S1 is electrically connected with the voltage tracking circuit 6. In addition, the auxiliary voltage is outputted from the second terminal of the first secondary winding S1.

The anode of the first diode D1 is electrically connected with the second terminal of the first secondary winding S 1. The first terminal of the first capacitor C1 is electrically connected with the cathode of the first diode D1. The second terminal of the first capacitor C1 is electrically connected with the ground terminal G. The first resistor R1 and the first capacitor C1 are connected with each other in parallel. The first terminal of the second secondary winding S2 (i.e., a common-polarity terminal) is electrically connected with the ground terminal G. The anode of the second diode D2 is electrically connected with the second terminal of the second secondary winding S2. The first terminal of the second resistor R2 is electrically connected with the cathode of the second diode D2. The voltage at the second terminal of the second resistor R2 is equal to the auxiliary voltage.

The voltage tracking circuit 6 includes a third resistor R3, a third diode D3, a third capacitor C3, a fourth resistor R4, a fifth resistor R5 and a sixth resistor R6. The first terminal of the third resistor R3 is electrically connected with the second terminal of the first secondary winding S1. The cathode of the third diode D3 is electrically connected with the second terminal of the third resistor R3. The first terminal of the third capacitor C3 is electrically connected with the anode of the third diode D3. In addition, the first terminal of the third capacitor C3 is electrically connected with the secondary side controller 5. The first terminal of the third capacitor C3 issues the detection signal to the secondary side controller 5. The second terminal of the third capacitor C3 is electrically connected with the ground terminal G. The first terminal of the fourth resistor R4 is electrically connected with the anode of the third diode D3. The first terminal of the fifth resistor R5 is electrically connected with the second terminal of the fourth resistor R4. The second terminal of the fifth resistor R5 is electrically connected with the ground terminal G. The first terminal of the sixth resistor R6 is electrically connected with the second terminal of the fourth resistor R4. The second terminal of the sixth resistor R6 is electrically connected with a voltage source VS.

As shown in FIG. 2, the voltage of the detection voltage at the first terminal of the third capacitor C3 may be expressed as the following formula:

$$Vc1 = -\frac{Np}{Ns1} \times Vin$$

In the above formula, Vc1 is the magnitude of the voltage of the detection signal at the first terminal of the third capacitor C3, Np is the turn number of the primary winding P1, Ns1 is the turn number of the first secondary winding S1, and Vin is the DC link voltage.

As mentioned above, the voltage waveform of the detection signal is the reverse waveform of the DC link voltage, and the voltage magnitude of the detection signal and the magnitude of the DC link voltage are in a proportional relation.

In an embodiment, the auxiliary conversion circuit 4 further includes a fourth capacitor C4 and an inductor L. The first terminal of the fourth capacitor C4 is electrically connected with the first terminal of the primary winding P1. The second terminal of the fourth capacitor C4 is electrically connected with the ground terminal. The inductor L is electrically connected between the first terminal and the second terminal of the primary winding P1.

The detection signal outputted from the voltage tracking circuit 6 can be used for ripple compensation. Furthermore, when there is a transient change in the utility power voltage, the DC link voltage will have corresponding drastic changes. The detection signal outputted from the voltage tracking circuit 6 can pre-warn the secondary side controller 5. Consequently, the secondary side controller 5 correspondingly controls the operations of the LLC converter 3. Since the second voltage output by the secondary side circuit 31 will not rise or drop with the transient change of the DC link voltage, the protecting purpose is achieved and the stability of the power supply apparatus 1 is enhanced.

Furthermore, the voltage tracking circuit 6 can be used to set different power-off voltages according to the capacitance decay conditions of different input capacitors and different load conditions. Generally, the load conditions are reflected on the secondary side of the LLC converter 3, and the information about the bulk voltage is reflected on the primary side of LLC converter 3. Since the detection signal outputted from the voltage tracking circuit 6 reflects the bulk voltage to the secondary side of LLC converter 3, the power-off voltage can be determined according to the capacitance decay conditions of different input capacitors, different load conditions and the detected bulk voltages. Consequently, the purpose of dynamically increasing the time of power supply apparatus 1 can be achieved.

In an embodiment, the power supply apparatus 1 further includes a primary side controller 7. The primary side controller 7 is disposed on the primary side of the LLC converter 3. In addition, the primary side controller 7 is electrically connected with the power factor correction circuit 2 for controlling the operations of the power factor correction circuit 2. The primary side controller 7 further detects and correspondingly adjusts the magnitude of the first voltage that is outputted from the power factor correction circuit 2.

In an embodiment, the power supply apparatus 1 further includes an auxiliary controller 40. The auxiliary controller 40 is electrically connected with the auxiliary conversion circuit 4 for controlling the operations of the auxiliary conversion circuit 4. For example, the auxiliary controller 40 is electrically connected with the control terminal of the auxiliary switch S for controlling the operations of the auxiliary switch S.

From the above descriptions, the present disclosure provides a power supply apparatus. The voltage tracking circuit of the power supply apparatus detects the auxiliary voltage from the auxiliary conversion circuit and provides the detection result to the secondary side controller, which is disposed on the secondary side of the LLC converter. According to the ripple change of the DC link voltage, the secondary side controller instantly generates the reverse waveform that is opposite to the waveform of the DC link voltage. According to the reverse waveform, the secondary side controller controls the operations of the LLC converter in order to suppress the voltage ripples of the DC link voltage. The power supply apparatus of the present disclosure can directly customize a corresponding ripple compensation method according to the magnitude of the ripple source. Consequently, regardless of the input capacitance value, the input frequency change or the load change, the secondary side controller can give the optimized ripple compensation value. Furthermore, the secondary side controller instantly generates the reverse waveform opposite to the waveform of the DC link voltage according to the ripple change of the DC link voltage. Consequently, the ripple compensation purpose is achieved. Since the ripple compensation is not based on the output voltage of the power supply apparatus, the power supply apparatus of the present disclosure is capable of performing the ripple compensation for the constant resistance loads and the constant current loads.

## Claims

1. A power supply apparatus (1), **characterized by** comprising:

    a power factor correction circuit (2) configured to convert a DC link voltage into a first voltage;
    an LLC converter (3) comprising a primary side circuit (30) and a secondary side circuit (31), which are coupled with each other, wherein the primary side circuit (30) is electrically connected with the power factor correction circuit (2) to receive the first voltage, the first voltage is converted into a second voltage by the LLC converter (3), and the second voltage is outputted from the secondary side circuit (31);
    an auxiliary conversion circuit (4) electrically connected with the power factor correction circuit (2) and configured to convert the first voltage into an auxiliary voltage;
    a secondary side controller (5) disposed on a secondary side of the LLC converter (3) and configured to control operations of the LLC converter (3); and
    a voltage tracking circuit (6) electrically connected to the auxiliary conversion circuit (4) and configured to detect the auxiliary voltage and issue a detection signal to the secondary side controller (5) according to a result of detecting the auxiliary voltage,
    wherein according to the detection signal, the secondary side controller (5) tracks a ripple change of the DC link voltage and instantly generates a reverse waveform opposite to a waveform of the DC link voltage, wherein the secondary side controller (5) controls the operations of the LLC converter (3) according to the reverse waveform, so that secondary side voltage ripples of the DC link voltage are suppressed.

2. The power supply apparatus (1) according to claim 1, wherein the auxiliary conversion circuit (4) comprises a transformer (T), and the transformer (T) comprises a primary winding (P1), a first secondary winding (S 1) and a second secondary winding (S2), wherein a first terminal and a second terminal of the primary winding (P1) are electrically connected with the power factor correction circuit (2), the primary winding (P) is reversely coupled with the first secondary winding (S1) and the second secondary winding (S2), a first terminal of the first secondary winding (S1) is electrically connected with a ground terminal (G), a second terminal of the first secondary winding (S 1) is electrically connected with the voltage tracking circuit (6), and the auxiliary voltage is outputted from the second terminal of the first secondary winding (S 1).

3. The power supply apparatus (1) according to claim 2, wherein the auxiliary conversion circuit (4) further comprises a first diode (D1), a first capacitor (C1), a first resistor (R1), a second diode (D2), a second resistor (R2), an auxiliary switch (S) and a second capacitor (C2), wherein a first terminal of the auxiliary switch (S) is electrically connected with the second terminal of the primary winding (P1), a second terminal of the auxiliary switch (S) is electrically connected with the ground terminal (G), a first terminal of the second capacitor (C2) is electrically connected with the first terminal of the auxiliary switch (S), a second terminal of the second capacitor (C2) is electrically connected with the second terminal of the auxiliary switch (S), an anode of the first diode (D1) is electrically connected with the second terminal of the first secondary winding (S 1), a first terminal of the first capacitor (C1) is electrically connected with a cathode of the first diode (D1), a second terminal of the first capacitor (C1) is electrically connected with the ground terminal (G), the first resistor (R1) and the first capacitor (C1) are connected with each other in parallel, a first terminal of the second secondary winding (S2) is electrically connected with the ground terminal (G), an anode of the second diode (D2) is electrically connected with a second terminal of the second secondary winding (S2), a first terminal of the second resistor (R2) is electrically connected with a cathode of the second diode (D2), and a voltage at a second terminal of the second resistor (R2) is the auxiliary voltage.

4. The power supply apparatus (1) according to claim 2, wherein the voltage tracking circuit (6) comprises a third resistor (R3), a third diode (D3), a third capacitor (C3), a fourth resistor (R4), a fifth resistor (R5) and a sixth resistor (R6), wherein a first terminal of the third resistor (R3) is electrically connected with the second terminal of the first secondary winding (S 1), a cathode of the third diode (D3) is electrically connected with a second terminal of the third resistor (R3), a first terminal of the third capacitor (C3) is electrically connected with an anode of the third diode (D3), the first terminal of the third capacitor (C3) is electrically connected with the secondary side controller (5), the first terminal of the third capacitor (C3) issues the detection signal to the secondary side controller (5), a second terminal of the third capacitor (C3) is electrically connected with the ground terminal (G), a first terminal of the fourth resistor (R4) is electrically connected with the anode of the third diode (D3), a first terminal of the fifth resistor (R5) is electrically connected with a second terminal of the fourth resistor (R4), a second terminal of the fifth resistor (R5) is electrically connected with the ground terminal (G), a first terminal of the sixth resistor (R6) is electrically connected with the second terminal of the fourth resistor (R4), and a second terminal of the sixth resistor (R6) is electrically connected with a voltage source (VS).

5. The power supply apparatus (1) according to claim 2, wherein the auxiliary conversion circuit (4) further comprises a fourth capacitor (C4), wherein a first terminal of the fourth capacitor (C4) is electrically connected with the first terminal of the primary winding (P 1), and a second terminal of the fourth capacitor (C4) is electrically connected with the ground terminal (G).

6. The power supply apparatus (1) according to claim 2, wherein the auxiliary conversion circuit (4) further comprises an inductor (L), and the inductor (L) is electrically connected between the first terminal and the second terminal of the primary winding (P1).

7. The power supply apparatus (1) according to claim 1, further comprising an auxiliary controller (40), which is electrically connected with the auxiliary conversion circuit (4) for controlling the auxiliary conversion circuit (4).

FIG. 1

FIG. 2

DC link
voltage

Reverse
waveform

Time

FIG. 3

Europäisches
Patentamt

European
Patent Office

Office européen
des brevets

# EUROPEAN SEARCH REPORT

**Application Number**

EP 24 17 5446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/079872 A1 (RYU DONG KYUN [KR] ET AL) 17 March 2016 (2016-03-17) * figure 1 * | 1-7 | INV.<br>H02M1/15<br>H02M3/00<br>H02M3/335<br>H02M1/00<br>H02M1/42 |
| A | CN 113 595 415 A (YUAN YUANLAN) 2 November 2021 (2021-11-02) * figure 7 * | 1-7 | |
| A | JP 2000 125547 A (SANKEN ELECTRIC CO LTD) 28 April 2000 (2000-04-28) * figures 1-7 * | 1-7 | |
| A | US 2005/185431 A1 (SHIMIZU TAMIO [JP] ET AL) 25 August 2005 (2005-08-25) * figures 1, 2 * | 1-7 | |
| A | US 2014/176049 A1 (YAMADA TAKASHI [JP] ET AL) 26 June 2014 (2014-06-26) * figures 1-3, 6, 7 * | 1-7 | |

**TECHNICAL FIELDS SEARCHED (IPC)**

H02M

The present search report has been drawn up for all claims

| Place of search | Date of completion of the search | Examiner |
|---|---|---|
| The Hague | 24 October 2024 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 5446

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2024

| Patent document cited in search report | Publication date | Patent family member(s) | Publication date |
|---|---|---|---|
| US 2016079872 A1 | 17-03-2016 | NONE | |
| CN 113595415 A | 02-11-2021 | NONE | |
| JP 2000125547 A | 28-04-2000 | NONE | |
| US 2005185431 A1 | 25-08-2005 | JP 2005237123 A<br>US 2005185431 A1 | 02-09-2005<br>25-08-2005 |
| US 2014176049 A1 | 26-06-2014 | CN 103904758 A<br>DE 102013227154 A1<br>JP 5701283 B2<br>JP 2014128060 A<br>US 2014176049 A1 | 02-07-2014<br>26-06-2014<br>15-04-2015<br>07-07-2014<br>26-06-2014 |

EPO FORM P0459

For more details about this annex : see Official Journal of the European Patent Office, No. 12/82